# EUROPÄISCHE PATENTSCHRIFT

(11) **EP 2 019 015 B1**
(45) Veröffentlichungstag und Bekanntmachung des Hinweises auf die Patenterteilung: **09.07.2014**
(21) Anmeldenummer: 08009971.6
(22) Anmeldetag: 30.05.2008
(51) Int. Cl.: B62B 3/06, B62B 5/00

(54) **Niederhubwagen**
Pallet truck
Chariot élévateur à petite levée

(30) Priorität: 27.07.2007 DE 102007035268
(43) Veröffentlichungstag der Anmeldung: 28.01.2009
(73) Patentinhaber: Linde Material Handling GmbH, 63743 Aschaffenburg (DE)
(72) Erfinder: Frangeul, Xavier, 86530 Cenon sur Vienne (FR)
(74) Vertreter: Geirhos, Johann

(56) Entgegenhaltungen:
- EP-A1- 1 298 023
- EP-A2- 0 711 698
- EP-A2- 0 811 469
- EP-A2- 0 999 081
- DE-A1-102004 014 773
- US-A- 5 346 354
- US-A- 5 691 584

## Beschreibung

Die Erfindung betrifft einen Niederhubwagen mit einer Fahrantriebseinheit, die ein Antriebsrad und einen mit dem Antriebsrad trieblich verbunden, als Elektromotor ausgebildeten Fahrmotor aufweist, der als bürstenloser Elektromotor ausgebildet ist.

Bei derartigen, gattungsgemäßen Lagertechnikfahrzeugen ist der Fahrmotor der Fahrantriebseinheit üblicherweise oberhalb des Antriebsrades am Lagertechnikfahrzeug angeordnet und steht mit dem Antriebsrad über ein Untersetzungsgetriebe, beispielsweise ein von einem Kegelradgetriebe gebildetes Winkelgetriebe, mit dem Antriebsrad zu dessen Antrieb in Verbindung. Eine derartige Fahrantriebseinheit weist einen hohen Bauaufwand auf und verursacht einen hohen Bauraumbedarf.

Derartige Fahrantriebseinheiten für Lagertechnikfahrzeuge, bei denen ein Elektromotor unter Zwischenschaltung eines Untersetzungsgetriebes ein Antriebsrad antreibt, sind aus der EP 0 999 081 A2 oder der US 5 691 584 bekannt.

Aus der Figur 3 der DE 10 2004 014 773 A1 ist ein gattungsgemäßer Niederhubwagen mit zwei parallel an einem Drehschemel angeordneten Antriebsrädern bekannt, zu deren Antrieb zwischen den Antriebsrädern ein elektrischer Doppelläufer-Motor angeordnet ist, der als bürstenloser Motor ausgebildet sind.

Die EP 0 711 698 A2 offenbart einen Verteiler- bzw. Zustellerwagen, der mit bürstenlosen Elektromotoren an Bockrollen als Fahrantrieb versehen ist.

Aus der EP 1 298 023 A1 ist ein Verteiler- bzw. Zustellerwagen bekannt, dessen Fahrantrieb von getriebelosen Radnabenmotoren an Bockrollen gebildet ist.

Der vorliegenden Erfindung liegt die Aufgabe zugrunde, einen Niederhubwagen zur Verfügung zu stellen, der eine Fahrantriebseinheit mit einem geringen Bauaufwand und Bauraumbedarf aufweist.

Diese Aufgabe wird erfindungsgemäß dadurch gelöst, dass der Fahrmotor einen getriebelosen Direktantrieb des Antriebsrades bildet, der ohne Zwischenschaltung eines Getriebes mit dem Antriebsrad in trieblicher Verbindung steht, und der Fahrmotor als Außenläufer mit einem drehbaren Gehäuse ausgebildet ist, wobei das drehbare Gehäuse des Fahrmotors mit einem Flansch zur Aufnahme einer Radfelge des Antriebsrades versehen ist. Erfindungsgemäß wird somit ein getriebeloser Direktantrieb des Antriebsrades erzielt, wobei als Fahrmotor ein bürstenloser Elektromotor verwendet wird. Durch den Entfall eines Getriebes und Verwendung eines bürstenlosen Elektromotors als Fahrmotor kann hierbei ein wartungsfreier Fahrantrieb mit geringem Bauaufwand und Bauraumbedarf erzielt werden. Das Gehäuse des Fahrmotors ist mit einem Flansch zur Aufnahme einer Radfelge des Antriebsrades versehen. Bei einer derartigen Ausbildung des Fahrmotors als Außenläufer mit einem drehbaren Gehäuse kann mit einem Flansch, an dem die Radfelge befestigbar ist, auf einfache Weise das Antriebsrad von dem Fahrmotor angetrieben werden. Durch den Entfall eines Untersetzungsgetriebes ist zudem eine Fahrantriebseinheit mit geringem Eigengewicht erzielbar, die im Betrieb des Lagertechnikfahrzeugs geringe Geräusche aufweist.

Gemäß einer bevorzugten Ausführungsform der Erfindung ist der Fahrmotor als Radnabenmotor ausgebildet, der innerhalb des Antriebsrades angeordnet ist. Durch die Anordnung des Fahrmotors innerhalb der Umrisse des Antriebsrades kann der Bauraumbedarf für die Fahrantriebseinheit weiter verringert werden. Zudem ist eine günstige Schwerpunktlage mit einem tiefen Schwerpunkt der leicht und kompakt bauenden Fahrantriebseinheit und somit des Lagertechnikfahrzeugs erzielbar. Hierdurch ist das erfindungsgemäße Lagertechnikfahrzeug besonders für Anwendungen außerhalb von Lagerhallen und Produktionsbetrieben geeignet, bei denen eine unebene Fahrbahnoberfläche gegeben ist, beispielsweise auf Straßen und Plätzen. Aufgrund der günstigen Schwerpunktlage und des geringen Eigengewichts weist das erfindungsgemäße Lagertechnikfahrzeug bei Hindernisse, beispielsweise Bordsteinkanten und Bordsteinabsenkungen, an Steigungen und Gefällen sowie an seitlich geneigten Fahrbahnen eine hohe Stabilität auf.

Besondere Vorteile ergeben sich, wenn das Gehäuse des Fahrmotors mit einem weiteren Flansch zur Befestigung einer Bremseinrichtung, insbesondere einer

Bremsscheibe einer Feststellbremseinrichtung, versehen ist. Hierdurch kann auf einfache Weise eine Feststellbremseinrichtung mit dem Fahrmotor und somit dem Antriebsrad verbunden werden.

Gemäß einer bevorzugten Weiterbildung der Erfindung ist das Gehäuse auf einer den Fahrmotor durchsetzenden Lagerwelle drehbar gelagert, wobei die Lagerwelle an einem Lagerbauteil des Lagertechnikfahrzeugs drehfest befestigbar ist. Die Lagerwelle des Fahrmotors bildet somit eine feststehende Radwelle zur Befestigung der Fahrantriebseinheit am Lagertechnikfahrzeug. Hierdurch kann mit geringem Bauaufwand die Fahrantriebseinheit am Lagertechnikfahrzeug befestigt werden und das Reaktionsmoment des Fahrmotors am Lagertechnikfahrzeug abgestützt werden kann.

Hinsichtlich eines geringen Bauaufwands und einer einfachen Montage bzw. Demontage der Fahrantriebseinheit ergeben sich Vorteile, wenn gemäß einer vorteilhaften Weiterbildung der Erfindung die Lagerwelle an dem Lagerbauteil mittels einer Reibschlussverbindung befestigbar ist. Anstelle einer beispielsweise als Klemmschlussverbindung ausgebildeten Reibschlussverbindung es ist jedoch ebenfalls möglich, eine Formschlussverbindung zur Befestigung der aus dem Antriebsrad und dem Fahrmotor bestehenden Fahrantriebseinheit am Lagertechnikfahrzeug vorzusehen.

Das Lagerbauteil ist gemäß einer bevorzugten Ausgestaltungsform der Erfindung als Lagergabel ausgebildet, die mit mindestens einem Wellenabsatz der Lagerwelle in Wirkverbindung bringbar ist. Durch ein axiales Verspannen der Lagergabel gegen den Wellenabsatz, beispielsweise mittels einer Schraubverbindung, kann hierbei auf einfache Weise eine Reibschlussverbindung zwischen der Lagerwelle und dem Lagerbauteil zur Befestigung der Fahrantriebeinheit am Lagertechnikfahrzeug hergestellt werden.

Eine einfache Versorgung des als Radnabenmotors ausgebildeten Fahrmotors mit elektrischer Energie ist erzielbar, wenn gemäß einer vorteilhaften Weiterbildung der Erfindung zur elektrischen Versorgung des Elektromotors eine elektrische Kabelverbindung durch die Lagerwelle geführt ist.

Zweckmäßigerweise ist in den Elektromotor eine elektronische Steuerung integriert, wodurch der Bauaufwand weiter verringert werden kann.

Sofern gemäß einer vorteilhaften Weiterbildung der Erfindung durch Gegenstrombremsen mit dem Fahrmotor eine Betriebsbremseinrichtung erzielbar ist, kann auf einfache Weise eine Betriebsbremseinrichtung des Lagertechnikfahrzeugs mit guten Steuerungseigenschaften in der Bremsphase vorgesehen werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes als Niederhubwagen ausgebildetes Lagertechnikfahrzeug,
- Figur 2: die Fahrantriebseinheit in einer vergrößerten Darstellung,
- Figur 3: den Fahrmotor in einer vergrößerten Darstellung und
- Figur 4: das Antriebsteil des Lagertechnikfahrzeugs mit der Fahrantriebseinheit in einer vergrößerten Darstellung.

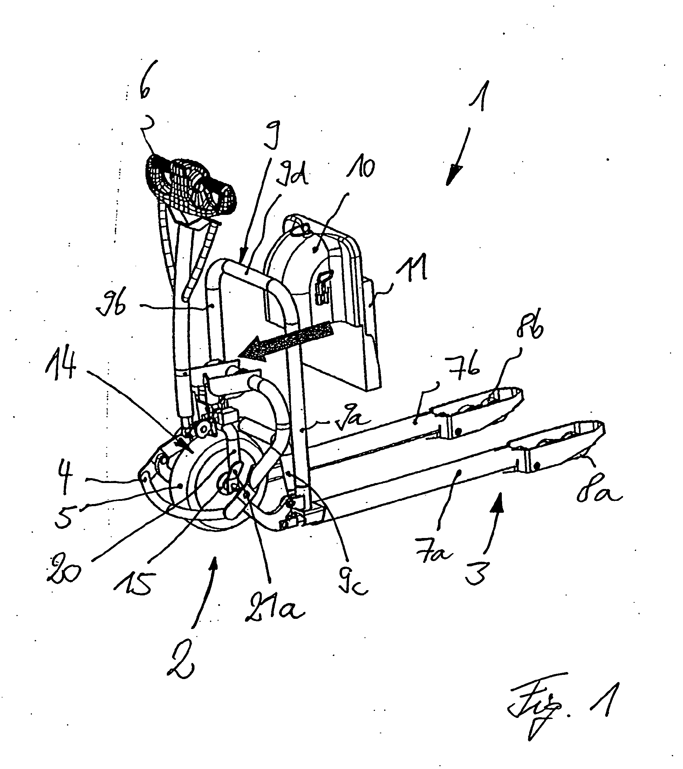

In der Figur 1 ist ein erfindungsgemäßes, als Niederhubwagen ausgebildetes Lagertechnikfahrzeug 1 mit einem Antriebsteil 2 und einem auf nicht mehr dargestellte Weise relativ zum Antriebsteil 2 vertikal bewegbaren Lastteil 3 dargestellt. Der Antriebsteil 2 umfasst einen bügelförmigen Rahmenabschnitt 4, an dem eine ein Antriebsrad 5 aufweisende Fahrantriebseinheit 14 lenkbar angeordnet ist. Das Lenken des Hubwagens 1 erfolgt mittels einer mit der Fahrantriebseinheit 14 verbundenen Deichsel 6. Das Antriebsrad 5 ist hierbei als luftbereiftes Antriebsrad ausgebildet.

Zum Lastteil 3 gehören zwei Lastarme 7a, 7b, die mittels vertikal anhebbaren und absenkbaren Lastrollen 8a, 8b auf einer Fahrbahn abgestützt sind, wobei mit den Lastarmen 7a, 7b Lasten, beispielsweise Paletten, Gitterboxen oder Kleinteilebehälter aufgenommen, angehoben und transportiert werden können. An dem dem Antriebsteil 2 zugewandten Bereich des Lastteils 3 ist am Lastteil 3 eine vertikale Gehäuseaufnahme 9 angeordnet, die von vertikal angeordneten seitlichen Bügeln 9a, 9b, einem unteren Querbügel 9c und einem oberen Querbügel 9d gebildet ist. In der Gehäuseaufnahme 9 kann ein Gehäuse 10 befestigt werden, das mit einem Batteriefach für eine Batterie 11 und weiteren elektrischen bzw. elektronischen Komponenten eines elektrischen Antriebssystems des Lagertechnikfahrzeuges 1 versehen ist.

Der bügelförmige Rahmenabschnitt 4 des Antriebsteils 2 und der von den Lastarmen 7a, 7b sowie der Gehäuseaufnahme 9 gebildete Lastteil 3 ist hierbei von einstückigen Hohlprofilen, beispielsweise Rohrprofilen, mit einem geschlossenen Querschnitt gebildet, wodurch das Lagertechnikfahrzeug 1 bei hoher Stabilität und Festigkeit ein geringes Eigengewicht aufweist.

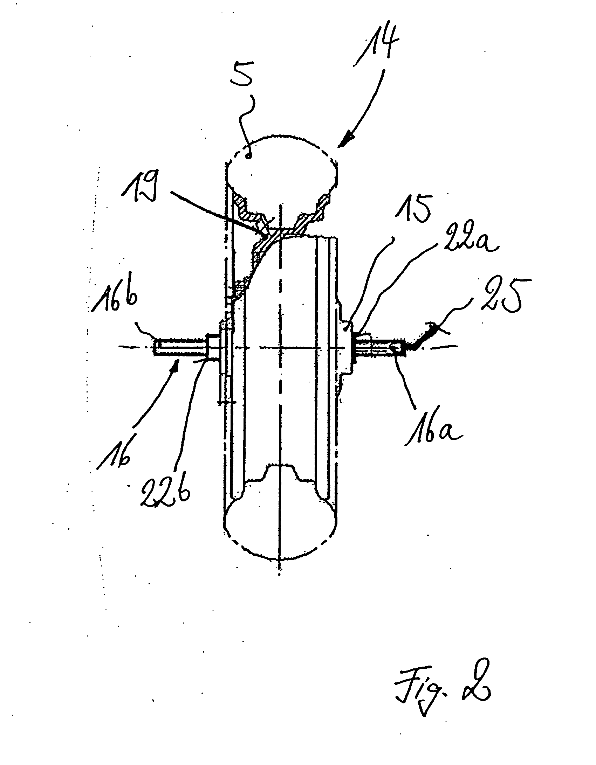

Erfindungsgemäß weist die Fahrantriebseinheit 14 zum Antrieb des Antriebsrades 5 einen als bürstenloser Elektromotor 15 ausgebildeten Radnabenmotor auf, der ohne Zwischenschaltung eines Getriebes mit dem Antriebsrad 5 in Verbindung steht. Der als Radnabenmotor ausgebildete Elektromotor 15 ist hierbei - wie in der Figur 2 ersichtlich ist - innerhalb der Umrisse des Antriebsrades 5 angeordnet und somit in das Antriebsrad 5 integriert.

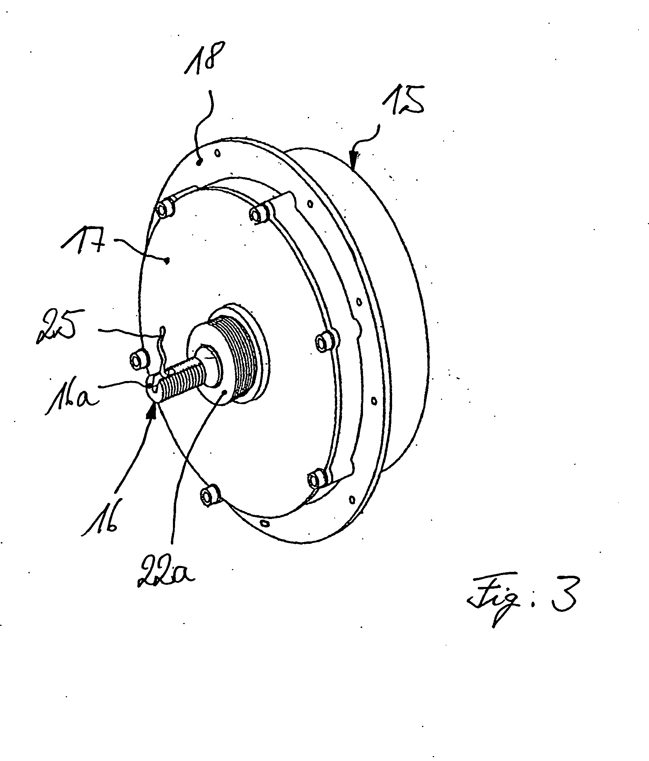

Der den Fahrmotor bildende Elektromotor 15 weist - wie in der Figur 3 dargestellt ist - eine Lagerwelle 16 auf, an der ein Gehäuse 17 drehbar gelagert ist. Das Gehäuse 17 ist hierbei mit einem Flansch 18 zur Befestigung einer Radfelge 19 des Antriebsrades 5 versehen.

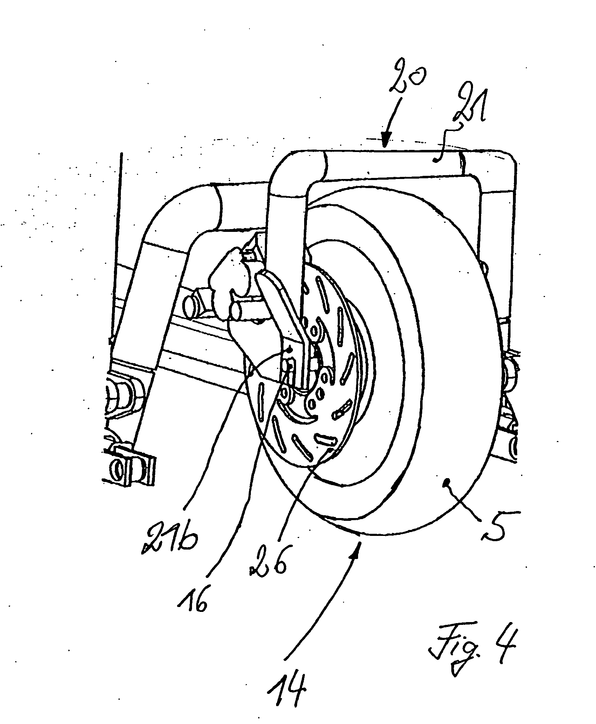

Die Lagerwelle 16 durchsetzt das Gehäuse 16 des Elektromotors 15 in axialer Richtung und ist an einem in der Figur 4 dargestellten Lagerbauteil 20 des Lagertechnikfahrzeugs 1 drehfest befestigbar.

Das Lagerbauteil 20 ist als Lagergabel 21 ausgebildet und weist in den Figuren 1 und 4 dargestellte Flanschplatten 21a, 21 b auf, die mit jeweils einer langlochartigen Ausnehmung versehen sind, die zur Aufnahme jeweils eines aus dem Gehäuse 17 herausragenden Wellenendes 16a bzw. 16b der Lagerwelle 16 vorgesehen sind. Die Lagerwelle 16 ist hierbei an den beiden Wellenenden 16a, 16b mit jeweils einem Wellenabsatz 22a, 22b versehen, der mit der entsprechenden Flanschplatte 21 a, 21 b in Wirkverbindung bringbar ist. Durch axiales Verspannen der Flanschplatten 21 a, 21 b gegen die Wellenabsätze 22a, 22b kann hierbei zwischen der Lagerwelle 16 und dem Lagerbauteil 20 eine Reibschlussverbindung erzeugt werden und die Lagerwelle 16 drehfest am Lagerbauteil 20 befestigt werden. Hierzu sind die Wellenenden 16a, 16b der Lagerwelle 16 mit jeweils einem Gewindeabschnitt versehen, so dass durch auf die Wellenenden 16a, 16b der Lagerwelle 16 aufgeschraubte, nicht mehr dargestellte Gewindemuttern die Flanschplatten 21 a, 21 b gegen die Wellenabsätze 22a, 22b axial verspannt werden können.

An dem Gehäuse 17 des Elektromotors 15 ist ein weiterer, nicht mehr dargestellter Flansch angeordnet, an dem eine in der Figur 4 dargestellte Bremseinrichtung 26, beispielsweise eine Bremsscheibe einer Feststellbremseinrichtung, befestigt werden kann.

Durch die Lagerwelle 16, beispielsweise das Wellenende 16a, ist weiterhin eine elektrische Kabelverbindung 25 geführt, wodurch auf einfache Weise eine elektrische Verbindung des Elektromotors 15 mit dem Gehäuse 10 hergestellt werden kann.

## Patentansprüche

1. Niederhubwagen mit einer Fahrantriebseinheit (14), die ein Antriebsrad (5) und einen mit dem Antriebsrad (5) trieblich verbunden, als Elektromotor (15) ausgebildeten Fahrmotor aufweist, der als bürstenloser Elektromotor (15) ausgebildet ist, wobei der Fahrmotor einen getriebelosen Direktantrieb des Antriebsrades (5) bildet, der ohne Zwischenschaltung eines Getriebes mit dem Antriebsrad (5) in trieblicher Verbindung steht, **dadurch gekennzeichnet**, der Fahrmotor als Außenläufer mit einem drehbaren Gehäuse (17) ausgebildet ist, wobei das drehbare Gehäuse (17) des Fahrmotors mit einem Flansch (18) zur Aufnahme einer Radfelge (19) des Antriebsrades (5) versehen ist.

2. Niederhubwagen nach Anspruch 1, **dadurch gekennzeichnet, dass** der Fahrmotor als Radnabenmotor ausgebildet ist, der innerhalb des Antriebsrades (5) angeordnet ist.

3. Niederhubwagen nach Anspruch 1 oder 2, **dadurch gekennzeichnet, dass** das Gehäuse (17) des Fahrmotors mit einem weiteren Flansch zur Befestigung einer Bremseinrichtung (26), insbesondere einer Bremsscheibe einer Feststellbremseinrichtung, versehen ist.

4. Niederhubwagen nach einem der Ansprüche 1 bis 3, **dadurch gekennzeichnet, dass** das Gehäuse (17) auf einer den Fahrmotor durchsetzenden Lagerwelle (16) drehbar gelagert ist, wobei die Lagerwelle (16) an einem Lagerbauteil (20) des Lagertechnikfahrzeugs drehfest befestigbar ist.

5. Niederhubwagen nach Anspruch 4, **dadurch gekennzeichnet, dass** die Lagerwelle (16) an dem Lagerbauteil (20) mittels einer Reibschlussverbindung befestigbar ist.

6. Niederhubwagen nach Anspruch 4 oder 5, **dadurch gekennzeichnet, dass** das Lagerbauteil (20) als Lagergabel (21) ausgebildet ist, die mit mindestens einem Wellenabsatz (22a; 22b) der Lagerwelle (16) in Wirkverbindung bringbar ist.

7. Niederhubwagen nach einem der Ansprüche 4 bis 6, **dadurch gekennzeichnet, dass** zur elektrischen Versorgung des Fahrmotors eine elektrische Kabelverbindung (25) durch die Lagerwelle (16) geführt ist.

8. Niederhubwagen nach einem der vorangegangenen Ansprüche, **dadurch gekennzeichnet, dass** in den Fahrmotor eine elektronische Steuerung integriert ist.

9. Niederhubwagen nach einem der vorangegangenen Ansprüche, **dadurch gekennzeichnet, dass** durch Gegenstrombremsen mit dem Fahrmotor eine Betriebsbremseinrichtung erzielbar ist.

## Claims

1. Pallet truck having a traction drive unit (14) which has a drive wheel (5) and a traction motor which is embodied as an electric motor (15) and has a drive connection to the drive wheel (5), which motor is embodied as a brushless electric motor (15), wherein the traction motor forms a gearless direct drive of the drive wheel (5) which has a drive connection to the drive wheel (5) without intermediate connection of a transmission, **characterized in that** the traction motor is embodied as an external rotor with a rotatable housing (17), wherein the rotatable housing (17) of the traction motor is provided with a flange (18) for receiving a wheel rim (19) of the drive wheel (5).

2. Pallet truck according to Claim 1, **characterized in that** the traction motor is embodied as a wheel hub motor which is arranged inside the drive wheel (5).

3. Pallet truck according to Claim 1 or 2, **characterized in that** the housing (17) of the traction motor is provided with a further flange for attaching a brake device (26), in particular a brake disc of a parking brake device.

4. Pallet truck according to one of Claims 1 to 3, **characterized in that** the housing (17) is rotatably mounted on a bearing shaft (16) which penetrates the traction motor, wherein the bearing shaft (16) can be attached fixedly in terms of rotation to a bearing component (20) of the warehouse handling vehicle.

5. Pallet truck according to Claim 4, **characterized in that** the bearing shaft (16) can be attached to the bearing component (20) by means of a frictionally locking connection.

6. Pallet truck according to Claim 4 or 5, **characterized in that** the bearing component (20) is embodied as a bearing fork (21) which can be operatively connected to at least one shaft shoulder (22a; 22b) of the bearing shaft (16).

7. Pallet truck according to one of Claims 4 to 6, **characterized in that** an electric cable connection (25) is guided through the bearing shaft (16) in order to supply the traction motor with electricity.

8. Pallet truck according to one of the preceding claims, **characterized in that** an electronic controller is integrated into the traction motor.

9. Pallet truck according to one of the preceding claims, **characterized in that** a service brake device can be implemented by counter-current braking.

## Revendications

1. Chariot élévateur à petite levée comprenant une unité d'entraînement de conduite (14), qui présente une roue d'entraînement (5) et un moteur de conduite réalisé en tant que moteur électrique (15), connecté par entraînement à la roue d'entraînement (5), lequel est réalisé sous forme de moteur électrique sans balai (15), le moteur de conduite formant un entraînement direct sans transmission de la roue d'entraînement (5), qui est en liaison d'entraînement avec la roue d'entraînement (5) sans l'interposition d'une transmission, **caractérisé en ce que** le moteur de conduite est réalisé sous forme de rotor extérieur avec un boîtier rotatif (17), le boîtier rotatif (17) du moteur de conduite étant muni d'une bride (18) pour recevoir une jante de roue (19) de la roue d'entraînement (5).

2. Chariot élévateur à petite levée selon la revendication 1, **caractérisé en ce que** le moteur de conduite est réalisé sous forme de moteur de moyeu de roue qui est disposé à l' intérieur de la roue d'entraînement (5).

3. Chariot élévateur à petite levée selon la revendication 1 ou 2, **caractérisé en ce que** le boîtier (17) du moteur de conduite est pourvu d'une bride supplémentaire pour la fixation d'un dispositif de freinage (26), en particulier d'un disque de frein d'un dispositif de frein de stationnement.

4. Chariot élévateur à petite levée selon l'une quelconque des revendications 1 à 3, **caractérisé en ce que** le boîtier (17) est monté de manière rotative sur un arbre de palier (16) traversant le moteur de conduite, l'arbre de palier (16) pouvant être fixé de manière solidaire en rotation à un composant de palier (20) du véhicule pour technique de stockage.

5. Chariot élévateur à petite levée selon la revendication 4, **caractérisé en ce que** l'arbre de palier (16) peut être fixé au composant de palier (20) au moyen d'une connexion par engagement par friction.

6. Chariot élévateur à petite levée selon la revendication 4 ou 5, **caractérisé en ce que** le composant de palier (20) est réalisé sous forme de fourche de palier (21) qui peut être amenée en liaison fonctionnelle avec au moins un épaulement d'arbre (22a ; 22b) de l'arbre de palier (16).

7. Chariot élévateur à petite levée selon l'une quelconque des revendications 4 à 6, **caractérisé en ce que** pour l'alimentation électrique du moteur de conduite, une liaison par câble électrique (25) est guidée à travers l'arbre de palier (16).

8. Chariot élévateur à petite levée selon l'une quelconque des revendications précédentes, **caractérisé en ce qu'**une commande électronique est intégrée dans le moteur de conduite.

9. Chariot élévateur à petite levée selon l'une quelconque des revendications précédentes, **caractérisé en ce qu'**un dispositif de frein de service peut être obtenu par un freinage par récupération d'énergie avec le moteur de conduite.
